# EUROPÄISCHE PATENTANMELDUNG

(11) **EP 3 822 076 A1**
(43) Veröffentlichungstag der Anmeldung: **19.05.2021**
(21) Anmeldenummer: 19209413.4
(22) Anmeldetag: 15.11.2019
(51) Int. Cl.: B32B 17/10, G02B 27/01

(54) **VERBUNDSCHEIBE FÜR EIN HEAD-UP-DISPLAY MIT EINER KEILFÖRMIGEN GLASSCHEIBE UND EINER KEILFÖRMIGEN ZWISCHENSCHICHT**

(71) Anmelder: SAINT-GOBAIN GLASS FRANCE, 92400 Courbevoie (FR)
(72) Erfinder: KREKEL, Daniel, 52064 Aachen (DE)
(74) Vertreter: Feist, Florian Arno

(57) **Zusammenfassung**

Die vorliegende Erfindung betrifft eine Verbundscheibe (10) für ein Head-Up-Display, die mindestens eine Außenscheibe (1) und eine Innenscheibe (2) umfasst, die über eine thermoplastische Zwischenschicht (3) miteinander verbunden sind, und die einen HUD-Bereich (B) aufweist mit einer Unterkante (BU) und einer Oberkante (BO), wobei
- die Dicke der Außenscheibe (1) und/oder der Innenscheibe (2) im vertikalen Verlauf zwischen der Unterkante (BU) und der Oberkante (BO) veränderlich ist mit einem Glas-Keilwinkel ((α_{G1}, α_{G2}),
- die Dicke der Zwischenschicht (3) im vertikalen Verlauf zwischen der Unterkante (BU) und der Oberkante (BO) veränderlich ist mit einem Folien-Keilwinkel (α_{F}),
so dass die voneinander abgewandten Oberflächen (I, IV) der Außenscheibe (1) und der Innenscheibe (2) zumindest im HUD-Bereich (B) zueinander geneigt sind mit einem Gesamt-Keilwinkel (αₜₒₜ),
wobei der Gesamt-Keilwinkel (αₜₒₜ) im vertikalen Verlauf von der Unterkante (BU) zur Oberkante (BO) des HUD-Bereichs (B) abnimmt.

## Beschreibung

Die Erfindung betrifft eine Verbundscheibe und eine Projektionsanordnung für ein Head-Up-Display, ein Verfahren zur Herstellung der Verbundscheibe und deren Verwendung.

Moderne Automobile werden in zunehmendem Maße mit sogenannten Head-Up-Displays (HUDs) ausgestattet. Mit einem Projektor, beispielsweise im Bereich des Armaturenbretts oder im Dachbereich, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen.

Bei den vorstehend beschriebenen Head-Up-Displays tritt das Problem auf, dass das Projektorbild an beiden Oberflächen der Windschutzscheibe reflektiert wird. Dadurch nimmt der Fahrer nicht nur das gewünschte Hauptbild wahr, welches durch die Reflexion an der innenraumseitigen Oberfläche der Windschutzscheibe hervorgerufen wird (Primärreflexion). Der Fahrer nimmt auch ein leicht versetztes, in der Regel intensitätsschwächeres Nebenbild wahr, welches durch die Reflexion an der außenseitigen Oberfläche der Windschutzscheibe hervorgerufen wird (Sekundärreflexion). Letzteres wird gemeinhin auch als Geisterbild ("Ghost") bezeichnet. Dieses Problem wird gemeinhin dadurch gelöst, dass die reflektierenden Oberflächen mit einem bewusst gewählten Winkel (Keilwinkel) zueinander angeordnet werden, so dass Hauptbild und Geisterbild überlagert werden, wodurch das Geisterbild nicht mehr störend auffällt.

Windschutzscheiben bestehen aus zwei Glasscheiben, welche über eine thermoplastische Folie miteinander laminiert sind. Üblicherweise wird der besagte Keilwinkel in die Zwischenschicht eingebracht, weil dies technisch relativ einfach zu bewerkstelligen ist. Man spricht auch von einer keilförmigen Folie oder Keilfolie. Verbundgläser mit Keilfolien sind beispielsweise aus WO2009/071135A1, EP1800855B1 oder EP1880243A2 bekannt. Es ist aber auch möglich, eine der Glasscheiben keilförmig herzustellen und den Keilwinkel dadurch in die Verbundscheibe einzubringen.

Im einfachsten Fall ist der Keilwinkel über den HUD-Bereich oder über die gesamte Scheibenhöhe konstant (lineare Dickenänderung). Es ist jedoch bekannt, dass eine bessere Kompensation des Geisterbilds dadurch möglich ist, dass der Keilwinkel im vertikalen Verlauf von der Unterkante zur Oberkante des HUD-Bereichs abnimmt (variabler Keilwinkel, nichtlineare Dickenänderung). Ein variabler Keilwinkel wird in DE102007059323A1 vorgeschlagen, wobei offenbart ist, dass der Keilwinkel in der Zwischenschicht oder alternativ in einer der Glasscheiben vorgesehen werden kann. In ähnlicher Weise lehrt EP3381879A1 einen variablen Keilwinkel, der ebenfalls entweder in der Zwischenschicht oder in einer der Glasscheiben ausgebildet ist.

Der Erfindung liegt die Aufgabe zugrunde, eine weiter verbesserte Verbundscheibe für ein Head-Up-Display bereitzustellen, durch welche das Auftreten von Doppelbildern effektiv vermieden wird.

Die Aufgabe der vorliegenden Erfindung wird erfindungsgemäß durch eine Verbundscheibe gemäß Anspruch 1 gelöst. Bevorzugte Ausführungen gehen aus den Unteransprüchen hervor.

Die erfindungsgemäße Verbundscheibe für ein Head-Up-Display (HUD) weist eine Oberkante und eine Unterkante auf. Mit Oberkante wird diejenige Seitenkante der Verbundscheibe bezeichnet, welche dafür vorgesehen ist, in Einbaulage nach oben zu weisen. Mit Unterkante wird diejenige Seitenkante bezeichnet, welche dafür vorgesehen ist, in Einbaulage nach unten zu weisen. Ist die Verbundscheibe die Windschutzscheibe eines Kraftfahrzeugs, so wird die Oberkante häufig auch als Dachkante und die Unterkante als Motorkante bezeichnet.

Die erfindungsgemäße Verbundscheibe umfasst eine Außenscheibe und eine Innenscheibe, die über eine thermoplastische Zwischenschicht miteinander verbunden sind. Die Verbundscheibe ist dafür vorgesehen, in einer Öffnung, insbesondere einer Fensteröffnung eines Fahrzeugs, den Innenraum gegenüber der äußeren Umgebung abzutrennen. Mit Innenscheibe wird im Sinne der Erfindung die dem Innenraum (Fahrzeuginnenraum) zugewandte Scheibe der Verbundscheibe bezeichnet. Mit Außenscheibe wird die der äußeren Umgebung zugewandte Scheibe bezeichnet.

Die erfindungsgemäße Verbundscheibe weist einen HUD-Bereich auf. Beim Betrieb des HUDs bestrahlt ein Projektor einen Bereich der Verbundscheibe, wo die Strahlung in Richtung des Betrachters (Fahrers) reflektiert wird, wodurch ein virtuelles Bild erzeugt wird, welches der Betrachter von ihm aus gesehen hinter der Verbundscheibe wahrnimmt. Der durch den Projektor bestrahlte beziehungsweise bestrahlbare Bereich der Verbundscheibe wird als HUD-Bereich bezeichnet. Die Strahlrichtung des Projektors kann typischerweise durch Spiegel variiert werden, insbesondere vertikal, um die Projektion an die Körpergröße des Betrachters anzupassen. Der Bereich, in dem sich die Augen des Betrachters bei gegebener Spiegelstellung befinden müssen, wird als Eyeboxfenster bezeichnet. Dieses Eyeboxfenster kann durch Verstellung der Spiegel vertikal verschoben werden, wobei der gesamte dadurch zugängliche Bereich (das heißt die Überlagerung aller möglichen Eyeboxfenster) als Eyebox bezeichnet wird. Ein innerhalb der Eyebox befindlicher Betrachter kann das virtuelle Bild wahrnehmen. Damit ist natürlich gemeint, dass sich die Augen des Betrachters innerhalb der Eyebox befinden müssen, nicht etwa der gesamte Körper.

Die hier verwendeten Fachbegriffe aus dem Bereich der HUDs sind dem Fachmann allgemein bekannt. Für eine ausführliche Darstellung sei auf die Dissertation "Simulationsbasierte Messtechnik zur Prüfung von Head-Up Displays" von Alexander Neumann am Institut für Informatik der Technischen Universität München (München: Universitätsbibliothek der TU München, 2012) verwiesen, insbesondere auf Kapitel 2 "Das Head-Up Display".

Der HUD-Bereich ist typischerweise polygonal ausgebildet und weist eine Unterkante und eine Oberkante auf. Die Unterkante des HUD-Bereichs ist der Unterkante der Verbundscheibe zugewandt und verläuft bevorzugt im Wesentlichen parallel zu dieser. Die Oberkante des HUD-Bereichs ist der Oberkante der Verbundscheibe zugewandt und verläuft bevorzugt im Wesentlichen parallel zu dieser.

Die Dicke mindestens einer der Scheiben (Außenscheibe und/oder Innenscheibe) ist im vertikalen Verlauf zwischen der Unterkante und der Oberkante des HUD-Bereichs veränderlich. Mit vertikalem Verlauf ist der Verlauf zwischen Unterkante und Oberkante mit Verlaufsrichtung im Wesentlichen senkrecht zu besagten Kanten bezeichnet. Die Dicke der besagten mindestens einen Scheibe nimmt insbesondere im vertikalen Verlauf zwischen der Unterkante und der Oberkante des HUD-Bereichs (bevorzugt monoton) zu. Mindestens eine der Scheiben ist also zumindest im HUD-Bereich keilförmig ausgebildet. Der Winkel zwischen den beiden Oberflächen der besagten Scheibe wird als Glas-Keilwinkel bezeichnet.

Ebenso ist die Dicke der Zwischenschicht im vertikalen Verlauf zwischen der Unterkante und der Oberkante des HUD-Bereichs veränderlich. Die Zwischenschicht ist also zumindest im HUD-Bereich keilförmig ausgebildet. Eine Zwischenschicht mit veränderlicher Dicke wird typischerweise als Keilfolie bezeichnet. Der Winkel zwischen den beiden Oberflächen der Zwischenschicht wird als Folien-Keilwinkel bezeichnet. Bevorzugt nimmt auch die Dicke der Zwischenschicht im vertikalen Verlauf zwischen der Unterkante und der Oberkante des HUD-Bereichs (insbesondere monoton) zu.

Ist ein Keilwinkel nicht konstant, so sind zu seiner Messung an einem Punkt die Tangenten an die Oberflächen heranzuziehen. Die keilförmigen Bereiche der mindestens einen Scheibe und der Zwischenschicht (also die Bereiche mit veränderlicher Dicke) können unabhängig voneinander auf den HUD-Bereich beschränken oder sich über den HUD-Bereich hinaus erstrecken. Insbesondere kann die gesamte mindestens eine Scheibe und/oder die gesamte Zwischenschicht keilförmig ausgebildet sein, so dass ihre Dicke im vertikalen Verlauf zwischen der Unterkante und der Oberkante der Verbundscheibe veränderlich ist, insbesondere (bevorzugt monoton) ansteigt.

Infolge der keilartigen Ausgestaltung der mindestens einen Scheibe und der Zwischenschicht sind die voneinander abgewandten Oberflächen der Außenscheibe und der Innenscheibe - also die außenseitige Oberfläche der Außenscheibe und die innenraumseitige Oberfläche der Innenscheibe - zumindest im HUD-Bereich zueinander geneigt. Sie schließen einen Keilwinkel ein, der im Sinne der Erfindung als Gesamt-Keilwinkel bezeichnet wird. Der Gesamt-Keilwinkel ergibt sich aus der Summe des oder der Glas-Keilwinkel und des Folien-Keilwinkels.

Die erfindungsgemäße Verbundscheibe zeichnet sich dadurch aus, dass der Gesamt-Keilwinkel im HUD-Bereich nicht konstant ist, sondern im vertikalen Verlauf von der Unterkante zur Oberkante des HUD-Bereichs abnimmt. Der Keilwinkel ist also zumindest im HUD-Bereich ortsabhängig. An der Oberkante des HUD-Bereich ist der Gesamt-Keilwinkel also geringer als an der Unterkante. Die Abnahme des Gesamt-Keilwinkel ist bevorzugt monoton und kann sich über den gesamten vertikalen Verlauf zwischen Unterkante und Oberkante erstrecken oder auch nur über einen Abschnitt davon. Der veränderliche Keilwinkel wird im Sinne der Erfindung auch als variabler Keilwinkel bezeichnet.

Wird zur Erzeugung eines Anzeigebildes des HUD ein Projektor auf die Verbundscheibe gerichtet, so wird das gewünschte virtuelle Bild durch Reflexion an der innenraumseitigen, von der Zwischenschicht abgewandten Oberfläche der Innenscheibe erzeugt. Der nichtreflektierte Teilstrahl verläuft durch die Verbundscheibe hindurch und wird an der außenseitigen, von der Zwischenschicht abgewandten Oberfläche der Außenscheibe ein weiteres Mal reflektiert. Dadurch wird ein unerwünschtes zweites virtuelles Bild, das sogenannte Geisterbild oder "Ghost" erzeugt. Im Falle paralleler Scheibenoberfläche würden Bild und Geisterbild versetzt zueinander erscheinen, was für den Betrachter störend ist. Durch den Keilwinkel wird das Geisterbild im Wesentlichen mit dem Bild räumlich überlagert, so dass der Betrachter nur noch ein einziges Bild wahrnimmt. Die Abnahme des Keilwinkels kann eine bessere Überlagerung von Hauptbild und Geisterbild bewirken als im Falle eines konstanten Keilwinkels. Außerdem ist der geringe Keilwinkel an der Oberkante des HUD-Bereichs vorteilhaft zur Vermeidung oder Verringerung von Doppelbilden in Transmission durch die Scheibe, die sich beispielsweise in einer doppelten Wahrnehmung der Scheinwerfer eines entgegenkommenden Fahrzeugs äußern.

Im Gegensatz zu herkömmlichen Verbundscheiben ist der Gesamt-Keilwinkel nicht in einem einzelnen Element der Verbundscheibe vorgesehen (beispielsweise einer Scheibe oder der Zwischenschicht), sondern gleichsam aufgeteilt auf mindestens eine der Scheiben und die Zwischenschicht. Dadurch können - bei gegebenem Gesamt-Keilwinkel - der oder die Glas-Keilwinkel und der Folienkeilwinkel kleiner gewählt werden, wodurch insbesondere im Falle der Scheiben eine bessere optische Qualität erreicht werden kann. Auch sind größere Gesamt-Keilwinkel zugänglich. Das sind große Vorteile der vorliegenden Erfindung.

Die Zwischenschicht ist typischerweise durch mindestens eine thermoplastische Folie ausgebildet. In einer vorteilhaften Ausgestaltung ist der Folien-Keilwinkel durch Recken einer im Ausgangszustand planen Folie (also einer Folie mit konstanter Dicke) in die Zwischenschicht eingebracht ist. Plane Folien sind kostengünstiger als vorgefertigte Keilfolien, so dass die Herstellung der Verbundscheibe weniger kostenintensiv ausfällt. Zudem kann der Gesamt-Keilwinkel durch das Recken sehr flexibel den Erfordernissen im Einzelfall entsprechend optimiert werden. So können beispielsweise Fertigungstoleranzen der keilförmigen Scheiben durch den Folien-Keilwinkel ausgeglichen werden. Der Fachmann erkennt nachträglich, ob ein Keilwinkel durch Recken oder durch Extrusion ausgebildet ist, insbesondere am typischen Dickenverlauf in der Nähe der Unterkante und/oder Oberkante.

Die erfindungsgemäße Verbundscheibe ist in einer bevorzugten Anwendung eine Fahrzeug-Windschutzscheibe, insbesondere die Windschutzscheibe eines Personen- oder Lastkraftwagens.

Der variable Gesamt-Keilwinkel wird bevorzugt durch einen variablen Glas-Keilwinkel erreicht. Die Außenscheibe und/oder die Innenscheibe weisen dabei einen variablen Glas-Keilwinkel auf, der im vertikalen Verlauf von der Unterkante zur Oberkante des HUD-Bereichs abnimmt. Der Folien-Keilwinkel ist dagegen im vertikalen Verlauf von der Unterkante zur Oberkante des HUD-Bereichs bevorzugt konstant. Ein keilförmiges Glas mit variablem Keilwinkel ist technisch einfacher zu realisieren als ein keilfärmiges Glas mit konstantem Keilwinkel, insbesondere im üblichen Floatglas-Verfahren. Grundsätzlich ist es aber auch denkbar, dass der Glaskeilwinkel konstant ist und der Folien-Keilwinkel veränderlich, oder dass sowohl Glas- als auch Folien-Keilwinkel veränderlich sind.

In einer weiteren bevorzugten Ausgestaltung ist der Folien-Keilwinkel veränderlich und steigt im vertikalen Verlauf von der Unterkante zur Oberkante des HUD-Bereichs an. Dies kann vorteilhaft sein, um einen zu starken Abfall des Glas-Keilwinkels zu kompensieren und dadurch einen geringeren Abfall des Gesamt-Keilwinkels zu realisieren. Insbesondere im Falle gereckter Folien kann der Folien-Keilwinkel sehr flexibel eingestellt werden, um ausgehend von einem gegebenen Glas-Keilwinkel einen angestrebten Gesamt-Keilwinkel zu erreichen, was ein großer Vorteil der Erfindung ist.

Alternativ ist es aber auch möglich, dass sowohl Glas-Keilwinkel als auch Folien-Keilwinkel im vertikalen Verlauf von der Unterkante zur Oberkante des HUD-Bereichs abnehmen.

In einer vorteilhaften Ausgestaltung sind sowohl die Innenscheibe als auch die Außenscheibe zumindest im HUD-Bereich keilförmig ausgestaltet. Die Dicke der Außenscheibe und die Dicke der Innenscheibe sind dabei im vertikalen Verlauf zwischen der Unterkante und der Oberkante des HUD-Bereichs veränderlich mit jeweils einem Glas-Keilwinkel. Dadurch können die einzelnen Glas-Keilwinkel kleiner gewählt werden, was der optischen Qualität der Scheiben zuträglich ist. In einer besonders bevorzugten Ausgestaltung weisen beide Scheiben einen variablen Keilwinkel auf, der zumindest im vertikalen Verlauf zwischen der Unterkante und der Oberkante des HUD-Bereichs abnimmt. Die ortsabhängigen Keilwinkel der beiden Scheiben können identisch oder unterschiedlich sein. Versuchspersonen haben berichtet, dass sie weniger Verzerrungen in der Ausgestaltung der Erfindung mit zwei keilförmigen Glasscheiben und einer durch Verstrecken hergestellten Zwischenschicht wahrgenommen haben als bei einer Kombination der Zwischenschicht mit einer keilförmigen und einer nicht keilförmigen Glasscheibe.

Werden die Scheiben im Floatglas-Verfahren hergestellt, so weisen sei typischerweise horizontale sogenannte Floatlinien auf. Eine bessere Qualität des HUD kann durch Gleichrichtung der Floatlinien der beiden (bevorzugt keilförmigen) Glasscheiben erreicht werden.

Es sind insbesondere die folgenden Konfigurationen denkbar, um die erfindungsgemäße Verbundscheibe zu realisieren:
- Außenscheibe mit konstanter Dicke, Innenscheibe mit variablem Keilwinkel und Zwischenschicht mit konstantem Keilwinkel
- Außenscheibe mit konstanter Dicke, Innenscheibe mit variablem Keilwinkel und Zwischenschicht mit variablem Keilwinkel
- Außenscheibe mit konstanter Dicke, Innenscheibe mit konstantem Keilwinkel und Zwischenschicht mit variablem Keilwinkel
- Außenscheibe mit variablem Keilwinkel, Innenscheibe mit konstanter Dicke und Zwischenschicht mit konstantem Keilwinkel
- Außenscheibe mit variablem Keilwinkel, Innenscheibe mit konstanter Dicke und Zwischenschicht mit variablem Keilwinkel
- Außenscheibe mit konstantem Keilwinkel, Innenscheibe mit konstanter Dicke und Zwischenschicht mit variablem Keilwinkel
- Außenscheibe mit variablem Keilwinkel, Innenscheibe mit konstantem Keilwinkel und Zwischenschicht mit konstantem Keilwinkel
- Außenscheibe mit konstantem Keilwinkel, Innenscheibe mit variablem Keilwinkel und Zwischenschicht mit konstantem Keilwinkel
- Außenscheibe mit konstantem Keilwinkel, Innenscheibe mit konstantem Keilwinkel und Zwischenschicht mit variablem Keilwinkel,
- Außenscheibe mit variablem Keilwinkel, Innenscheibe mit variablem Keilwinkel und Zwischenschicht mit konstantem Keilwinkel
- Außenscheibe mit variablem Keilwinkel, Innenscheibe mit konstantem Keilwinkel und Zwischenschicht mit variablem Keilwinkel
- Außenscheibe mit konstantem Keilwinkel, Innenscheibe mit variablem Keilwinkel und Zwischenschicht mit variablem Keilwinkel
- Außenscheibe mit variablem Keilwinkel, Innenscheibe mit variablem Keilwinkel und Zwischenschicht mit variablem Keilwinkel

Der Gesamt-Keilwinkel beträgt im gesamten HUD-Bereich bevorzugt von 0,05 mrad bis 1,0 mrad, besonders bevorzugt von 0,3 mrad bis 0,7 mrad. Damit werden gute Ergebnisse erzielt hinsichtlich der Vermeidung von Geisterbildern. Die Abnahme des Keilwinkels im vertikalen Verlauf ist bevorzugt derart, dass der Unterschied zwischen dem Gesamt-Keilwinkel an der Unterkante des HUD-Bereichs und dem Gesamt-Keilwinkel an der Oberkante des HUD-Bereichs mindestens 0,1 mrad beträgt, besonders bevorzugt mindestens 0,15 mrad, ganz besonders bevorzugt mindestens 0,2 mrad.

Es ist auch möglich, dass der Folien-Keilwinkel, der Glaskeilwinkel und/oder der Gesamt-Keilwinkel abschnittsweise im HUD-Bereich Null betragen. Dies wird insbesondere an der Oberkante oder an der Unterkante des HUD-Bereichs der Fall sein, je nachdem, ob ein steigender oder fallender Keilwinkel vorliegt.

Ein geringer Glas-Keilwinkel kann vorteilhaft sein im Hinblick auf die optische Qualität der Glasscheiben. In einer bevorzugten Ausgestaltung beträgt der Glas-Keilwinkel (im Falle einer keilförmigen Scheibe) beziehungsweise betragen die Glas-Keilwinkel (im Falle zweier keilförmiger Scheiben) höchstens 0,5 mrad, besonders bevorzugt 0,3 mrad, ganz besonders bevorzugt höchstens 0,25 mrad, insbesondere höchstens 0,2 mrad. Der beziehungsweise die Glas-Keilwinkel sollte(n) bevorzugt mindestens 0,05 mrad betragen, insbesondere mindestens 0,1 mrad. Bevorzugte Glas-Keilwinkel betragen also beispielsweise von 0,05 mrad bis 0,3 mrad, insbesondere von 0,1 mrad bis 0,25 mrad oder von 0,1 mrad bis 0,2 mrad. Der Folien-Keilwinkel beträgt bevorzugt von 0,05 mrad bis 0,3 mrad, insbesondere von 0,1 mrad bis 0,25 mrad.

Der Verlauf der Abnahme des Gesamt-Keilwinkels von der Unterkante zur Oberkante des HUD-Bereichs wird für das jeweilige Scheibenmodell anhand gängiger und an sich bekannter Modelle und Formelsätze berechnet, um eine möglichst effiziente Überlagerung von Hauptbild und Geisterbild zu erreichen. Beispielhaft sei auf WO2009071135A1 verwiesen sowie den darin zitierten Artikel J. P. Aclocque: "Doppelbilder als störender optischer Fehler der Windschutzscheibe", Z. Glastechn. Ber. 193 (1970) S. 193-198.

Die Außenscheibe und die Innenscheibe sind bevorzugt aus Glas gefertigt, insbesondere aus Kalk-Natron-Glas, was für Fensterscheiben üblich ist. Die Scheiben können grundsätzlich aber auch aus anderen Glasarten (beispielsweise Borsilikatglas, Quarzglas, Aluminosililatglas) oder transparenten Kunststoffen (beispielsweise Polymethylmethacrylat oder Polycarbonat) gefertigt sein.

Die Außenscheibe und die Innenscheibe können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein. Windschutzscheiben werden typischerweise aber aus nicht-vorgespannten Scheiben gefertigt. Es bildet sich während des Laminierens der Scheiben dennoch eine charakteristische Verteilung von Zug- und Druckspannungen aus, die der Fachmann aber problemlos von Spannungen, die bewusst durch die Verwendung vorgespannter Scheiben erzeugt werden, unterscheiden kann.

Die Dicken der Außenscheibe und der Innenscheibe können vom Fachmann den Erfordernissen im Einzelfall entsprechend frei gewählt werden. Die Dicken der Außenscheibe und der Innenscheibe betragen bevorzugt von 0,5 mm bis 4 mm, insbesondere von 1,0 mm bis 3,0 mm. Die Dicke von keilförmigen Glasscheiben wird an der Unterkante gemessen.

Die Zwischenschicht ist durch mindestens eine thermoplastische Folie ausgebildet. Der Keilwinkel kann durch geeignete Extrusion der Folie erzeugt sein oder durch Recken einer Folie mit im Ausgangszustand konstanter Dicke, wobei die letztgenannte Variante bevorzugt ist. Es kann auch eine im Ausgangszustand keilförmige Folie verwendet werden, deren Keilwinkel durch Recken (zumindest in Bereichen) vergrößert wird. Die Zwischenschicht kann durch eine einzelne Folie ausgebildet sein oder auch durch mehr als eine Folie. In letzterem Fall muss mindestens eine der Folien mit dem Keilwinkel ausgebildet sein. Die Zwischenschicht kann auch aus einer sogenannten akustischen Folie ausgebildet sein, welche eine geräuschdämpfende Wirkung hat. Solche Folien bestehen typischerweise aus mindestens drei Lagen, wobei die mittlere Lage eine höhere Plastizität oder Elastizität aufweist als die sie umgebenden äußeren Lagen, beispielsweise infolge eines höheren Anteils an Weichmachern.

Die Zwischenschicht enthält bevorzugt zumindest Polyvinylbutyral (PVB), Ethylenvinylacetat (EVA), Polyurethan (PU) oder Gemische oder Copolymere oder Derivate davon, besonders bevorzugt PVB. Die Zwischenschicht ist in einer bevorzugten Ausgestaltung aus einer PVB-Folie ausgebildet.

Die Zwischenschicht weist bevorzugt eine Minimaldicke von 0,3 mm bis 1,5 mm, besonders bevorzugt von 0,5 mm bis 1,0 mm auf. Mit Minimaldicke wird die Dicke an der dünnsten Stelle der Zwischenschicht bezeichnet, also typischerweise die Dicke an der Unterkante der Verbundscheibe. Verbundscheiben mit dünneren Zwischenschichten weisen häufig eine zu geringe Stabilität auf, um als Fahrzeugscheibe verwendet werden zu können. Thermoplastische Folien, insbesondere PVB-Folien werden in der Standarddicke 0,76 mm vertrieben. Aus diesen Folien lassen sich durch Recken vorteilhaft erfindungsgemäße Keilwinkel einbringen. Da die erfindungsgemäßen Keilwinkel sehr klein sind, wird die Folie lokal nicht so stark verdünnt, dass Probleme mit der Stabilität des Verbundglases auftreten.

Die Außenscheibe, die Innenscheibe und die thermoplastische Zwischenschicht können klar und farblos, aber auch getönt oder gefärbt sein. Die Gesamttransmission durch die Verbundscheibe beträgt in einer bevorzugten Ausgestaltung größer 70%, insbesondere wenn die Verbundscheibe eine Windschutzscheibe ist. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben.

Die Verbundscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Verbundscheibe kann aber auch plan sein, beispielsweise wenn es als Scheibe für Busse, Züge oder Traktoren vorgesehen ist.

Die Dicke der Verbundscheibe kann in horizontalen Schnitten durch den HUD-Bereich (das heißt Schnitte etwa parallel zu Oberkante und Unterkante) konstant sein. Dann ist das Dicken- und Keilwinkelprofil über die Breite des HUD-Bereichs konstant. Die Dicke kann aber auch in horizontalen Schnitten veränderlich sein. Dann ist die Dicke nicht nur im vertikalen, sondern auch im horizontalen Verlauf veränderlich.

Die Zwischenschicht kann durch eine einzelne Folie ausgebildet sein oder auch durch mehr als eine Folie. In letzterem Fall muss mindestens eine der Folien mit dem Keilwinkel ausgebildet sein. Die Zwischenschicht kann auch aus einer sogenannten akustischen Folie ausgebildet sein, welche eine geräuschdämpfende Wirkung hat. Solche Folien bestehen typischerweise aus mindestens drei Lagen, wobei die mittlere Lage eine höhere Plastizität oder Elastizität aufweist als die sie umgebenden äußeren Lagen, beispielsweise infolge eines unterschiedlichen Anteils an Weichmachern. Die Verwendung einer solchen geräuschdämpfenden, mehrlagigen Folie dient bevorzugt der Verbesserung des akustischen Komforts.

Die erfindungsgemäße Verbundscheibe kann eine funktionelle Beschichtung aufweisen, beispielweise eine IR-reflektierende oder absorbierende Beschichtung, eine UVreflektierende oder absorbierende Beschichtung, eine farbgebende Beschichtung, eine Beschichtung niedriger Emissivität, eine heizbare Beschichtung, eine Beschichtung mit Antennenfunktion, eine splitterbindende Beschichtung oder eine Beschichtung zur Abschirmung von elektromagnetischer Strahlung. Die funktionelle Beschichtung kann auf einer Oberfläche der ersten Glasscheibe oder der zweiten Glasscheibe angeordnet sein, oder auch auf einer Trägerfolie in der Zwischenschicht, die beispielsweise aus Polyethylenterephthalat (PET) besteht. Ist die Beschichtung korrosionsanfällig, beispielsweise silberhaltig, so ist sie bevorzugt auf einer der internen, einander zugewandten Oberflächen der Innen- und Außenscheibe angeordnet oder auf einer in den Verbund eingelegten Trägerfolie.

Die Erfindung umfasst außerdem eine Projektionsanordnung für ein Head-Up-Display. Die Projektionsanordnung umfasst mindestens eine erfindungsgemäße Verbundscheibe und einen Projektor, der auf den HUD-Bereich der Verbundscheibe gerichtet ist und diesem im Betrieb bestrahlt, um ein virtuelles Bild zu erzeugen, dass der Fahrer wahrnehmen kann. Der Projektor bestrahlt die Verbundscheibe über die innenraumseitige Oberfläche der Innenscheibe, die die Hauptreflexionsebene zur Erzeugung des Anzeigebildes bildet (Primärreflexion). Typische Einstrahlwinkel des HUD-Projektors auf die Verbundscheibe (gemessen zur Flächennormalen) liegen bei Kraftfahrzeugen typischerweise im Bereich von 50° bis 70°, insbesondere 60° bis 65°.

Die Erfindung umfasst außerdem Verfahren zur Herstellung einer Verbundscheibe für ein Head-Up-Display mit einem HUD-Bereich, der eine Unterkante und eine Oberkante aufweist, wobei
(a) eine Außenscheibe, eine Innenscheibe und eine thermoplastische Zwischenschicht bereitgestellt werden, wobei die Dicke der Außenscheibe und/oder der Innenscheibe im vertikalen Verlauf zwischen der Unterkante und der Oberkante des HUD-Bereichs veränderlich ist mit einem Glas-Keilwinkel und wobei die Dicke der Zwischenschicht im vertikalen Verlauf zwischen der Unterkante und der Oberkante des HUD-Bereichs veränderlich ist mit einem Folien-Keilwinkel;
(b) die Zwischenschicht zwischen der Außenscheibe und der Innenscheibe angeordnet wird, so dass die voneinander abgewandten Oberflächen der Außenscheibe und der Innenscheibe zumindest im HUD-Bereich zueinander geneigt sind mit einem Gesamt-Keilwinkel, wobei der Gesamt-Keilwinkel im vertikalen Verlauf von der Unterkante zur Oberkante des HUD-Bereichs abnimmt; und
(e) die Innenscheibe und die Außenscheibe durch Lamination miteinander verbunden werden.

Die Außenscheibe und die Innenscheibe werden bevorzugt im Floatglas-Verfahren hergestellt, insbesondere aus Kalk-Natron-Glas. Dabei wird die Glasschmelze im Durchlaufverfahren auf ein flüssiges Zinnbad gegossen, wo sie aushärtet. Keilförmige Gläser werden typischerweise dadurch erzeugt, dass die viskose, teilausgehärtete Glasmasse an ihren seitlichen Rändern mit geeigneten Werkzeugen gegriffen und im Wesentlichen senkrecht zur Fortbewegungsrichtung der Glasschmelze nach außen gezogen wird. Im Vergleich zur Herstellung planer Gläser wird dabei das Temperaturprofil der Floatanlage geändert, wodurch die Temperaturdifferenz zwischen der Mitte und den Rändern des Zinnbads reduziert wird. Die dadurch bedingte Änderung der Viskosität der Glasmasse führt zur Bildung des keilförmigen Glases. Dadurch einsteht ein Floatglas mit maximaler Dicke im Zentralbereich und nach außen abnehmender Dicke, aus dem die Glasscheiben für die Außenscheibe und die Innenscheibe ausgeschnitten werden können.

Die thermoplastische Zwischenschicht wird durch mindestens eine thermoplastische Folie ausgebildet. In einer vorteilhaften Ausführung ist die Folie im Ausgangszustand im Wesentlichen plan, so dass ihre Hauptoberflächen im Wesentlichen parallel zueinander ausgebildet sind. Der Folien-Keilwinkel wird durch Recken der planen Folie in die Zwischenschicht eingebracht. Dieses Verfahren ist kostengünstig und flexibel. Grundsätzlich ist es aber auch möglich, die Zwischenschicht aus einer keilförmigen Folie auszubilden, wobei der Folienkeilwinkel bei der Herstellung der Folie eingebracht wird, typischerweise durch Verwendung geeigneter Extrusionsdüsen.

Soll die Verbundscheibe gebogen sein, so werden die Außenscheibe und die Innenscheibe bevorzugt vor der Lamination einem Biegeprozess unterzogen. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C.

Die Herstellung der Verbundscheibe durch Lamination erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt dabei üblicherweise unter Einwirkung von Hitze, Vakuum und / oder Druck.

Bei einigen Verfahren zum Fügen und Verbinden der Scheiben und der Zwischenschicht kann es vorkommen, dass durch ein Anpressen der letzten Scheibe oder durch ein Verpressen des Verbunds der Keilwinkel der Zwischenschicht verändert wird. Im Allgemeinen tritt eine Vergrößerung des Keilwinkels auf. Dies kann erfindungsgemäß bereits durch die Wahl des Keilwinkels der Zwischenschicht berücksichtigt werden, und zwar beispielsweise derart, dass ein Korrekturwert für die beim Verbinden der Komponenten zu einem Verbundglas auftretenden Änderungen des Keilwinkels von dem zu erzielenden Wert abgezogen wird. Alternativ kann ein Korrekturwert auch bei einer auftretenden Verkleinerung des ursprünglichen Keilwerts der Zwischenschicht derart berücksichtigt werden, dass er zu dem Zielkeilwert für die Zwischenschicht addiert wird.

In einer alternativen Ausgestaltung der Erfindung ist die Zwischenschicht aus einer keilförmigen Folie durch Verstrecken derart hergestellt, dass der Keilwinkel der Folie nach dem Verstrecken größer ist als er vor dem Verstrecken war. In diesem Fall wird als Ausgangsmaterial der Zwischenschicht nicht eine flache Folie verwendet, sondern eine bereits keilförmige. Diese keilförmige Folie wird durch Verstrecken derart bearbeitet, dass sie einen größeren Keilwinkel aufweist als vor dem Verstrecken. Hierdurch kann die Herstellung der Verbundscheibe variabler gestaltet werden.

Die Erfindung umfasst außerdem die Verwendung einer erfindungsgemäßen Verbundscheibe in einem Kraftfahrzeug, bevorzugt einem Personenkraftwagen, als Windschutzscheibe, die als Projektionsfläche eines Head-Up-Displays dient.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Ausgestaltung der erfindungsgemäßen Verbundscheibe,
- Fig. 2: einen Querschnitt durch die Verbundscheibe nach Figur 1,
- Fig. 3: die Verbundscheibe der Figur 2 als Bestandteil einer erfindungsgemäßen Projektionsanordnung und
- Fig. 4: einen Querschnitt durch eine weitere Ausgestaltung der Verbundscheibe,
- Fig. 5: ein Flussdiagramm einer Ausführungsform des erfindungsgemäßen Verfahrens.

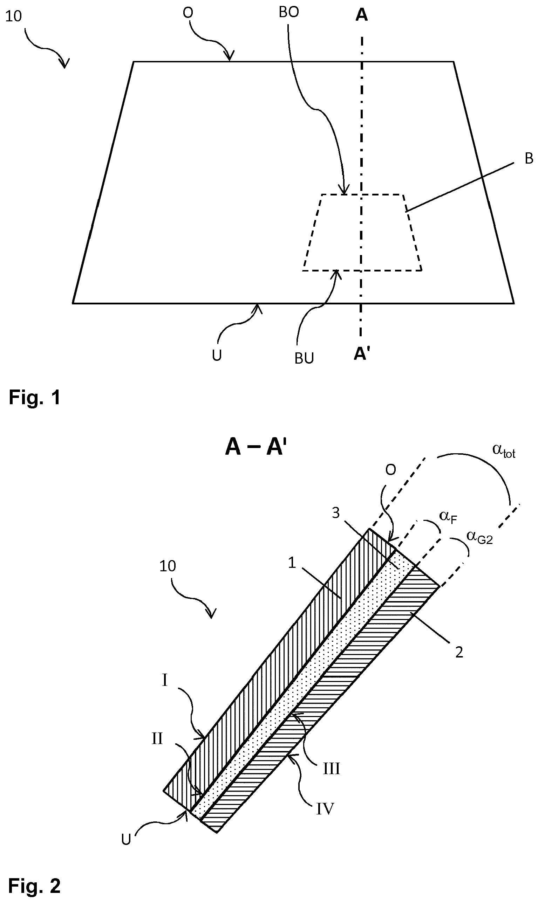

Figur 1 und Figur 2 zeigen je ein Detail einer erfindungsgemäßen Verbundscheibe 10, welche aus einer Außenscheibe 1 und einer Innenscheibe 2 besteht, die über eine thermoplastische Zwischenschicht 3 miteinander verbunden sind. Die Verbundscheibe 10 ist als Windschutzscheibe eines Kraftfahrzeugs vorgesehen, welches mit einem Head-Up-Display ausgestattet ist. Die Außenscheibe 1 ist in Einbaulage der äußeren Umgebung zugewandt, die Innenscheibe 2 dem Fahrzeuginnenraum. Die Oberkante O der Verbundscheibe 10 weist in Einbaulage nach oben zum Fahrzeugdach (Dachkante), die Unterkante U nach unten zum Motorraum (Motorkante).

Die Außenscheibe 1 weist eine außenseitige Oberfläche I auf, die in Einbaulage der äußeren Umgebung zugewandt ist, und eine innenraumseitige Oberfläche II, die in Einbaulage dem Innenraum zugewandt ist. Ebenso weist die Innenscheibe 2 eine außenseitige Oberfläche III auf, die in Einbaulage der äußeren Umgebung zugewandt ist, und eine innenraumseitige Oberfläche IV, die in Einbaulage dem Innenraum zugewandt ist. Die innenraumseitige Oberfläche II der Außenscheibe 1 ist über die Zwischenschicht 3 mit der außenseitigen Oberfläche III der Innenscheibe 2 verbunden.

In der Figur ist auch ein Bereich B angedeutet, welcher dem HUD-Bereich der Verbundscheibe 10 entspricht. In diesem Bereich sollen Bilder durch einen HUD-Projektor erzeugt werden. Die Primärreflexion an der innenraumseitigen Oberfläche IV der Innenscheibe 2 erzeugt die gewünschte HUD-Anzeige als virtuelles Bild. Die nicht reflektierten Strahlungsanteile dringen durch die Verbundscheibe 10 hindurch und werden an der außenseitigen Oberfläche I der Außenscheibe 1 abermals reflektiert (Sekundärreflexion). Der HUD-Bereich B weist eine Unterkante BU auf, die der Unterkante U der Verbundscheibe 10 zugewandt ist, und eine Oberkante BO, die der Oberkante O der Verbundscheibe 10 zugewandt ist.

Die Zwischenschicht und die Innenscheibe 2 sind keilförmig ausgebildet - ihre Dicke nimmt von der Unterkante U zur Oberkante O der Verbundscheibe 10 jeweils stetig zu. Daher sind die Hauptoberflächen der Zwischenschicht 3 nicht parallel, sondern zueinander geneigt mit einem Folien-Keilwinkel α_{F}. Auch die außenseitige Oberfläche III und die innenraumseitige Oberfläche IV der Innenscheibe 2 sind zueinander geneigt und schließen einen Glas-Keilwinkel α_{G2} ein. Die Außenscheibe 1 ist eine herkömmliche Scheibe mit konstanter Dicke, also parallelen Oberflächen I, II. Die externen Oberflächen der Verbundscheibe 10, also die außenseitige Oberfläche I der Außenscheibe 1 und die innenraumseitige Oberfläche IV der Innenscheibe 2 sind zueinander geneigt und schließen einen Gesamt-Keilwinkel αₜₒₜ ein, der sich aus der Summe des Folien-Keilwinkels α_{F} und des Glas-Keilwinkels α_{G2} ergibt.

Erfindungsgemäß ist der Gesamt-Keilwinkel αₜₒₜ im vertikalen Verlauf nicht konstant, sondern nimmt zumindest im HUD-Bereich B von unten nach oben - also im vertikalen Verlauf von der Unterkante BU zur Oberkante BO des HUD-Bereichs B - ab. Dies wird bevorzugt durch einen abnehmenden Glas-Keilwinkel α_{G2} erreicht, während der Folien-Keilwinkel α_{F} konstant ist. Ebenso kann aber auch der Folien-Keilwinkel α_{F} abnehmen und der Glaskeilwinkel α_{G2} konstant sein, oder beide Keilwinkel α_{F}, α_{G2} veränderlich. Die Änderung des Keilwinkels ist der Einfachheit halber in der Figur nicht widergegeben.

Durch die keilförmige Ausbildung der Verbundscheibe 10 werden die beiden virtuellen Bilder, die durch Reflexion des Projektorbildes an den Oberfläche I und IV erzeugt werden, miteinander überlagert. Die Sekundärreflexion erscheint daher nicht oder nur leicht versetzt zur Primärreflexion, so dass störende Geisterbilder vermieden werden können. Der nach oben hin abnehmende Keilwinkel im HUD-Bereich bewirkt eine besonders effiziente Überlappung. Dadurch, dass der Gesamt-Keilwinkel αₜₒₜ gleichsam auf mehrere Komponenten aufgeteilt ist, nämlich in diesem Fall auf die Zwischenschicht 3 mit dem Folien-Keilwinkel α_{F} und die Innenscheibe 2 mit dem Glas-Keilwinkel α_{G2}, können die einzelnen Keilwinkel kleiner gewählt werden, was eine verbesserte optische Qualität der Verbundscheibe 10 ermöglicht. Der variable Gesamt-Keilwinkel αₜₒₜ wird in dieser Ausgestaltung durch den variablen Glas-Keilwinkel α_{G2} erzeugt, was unter anderen deshalb vorteilhaft ist, weil variable Keilwinkel in Glasscheiben einfacher erzeugt werden können als konstante Keilwinkel.

Die Außenscheibe 1 und die Innenscheibe 2 bestehen beispielsweise aus Kalk-Natron-Glas. Die Außenscheibe 1 weist beispielsweise eine Dicke von 2,1 mm auf, die Innenscheibe 2 eine Dicke (gemessen an der Unterkante) von 1,6 mm. Die Zwischenschicht 3 ist beispielsweise aus einer einzelnen PVB-Folie ausgebildet, die im Ausgangszustand mit einer konstanten Dicke von 0,76 mm bereitgestellt wurde und in die der Folien-Keilwinkel α_{F} durch Recken eingebracht wurde. Der Folien-Keilwinkel α_{F} beträgt beispielsweise 0,05 mrad. Der Glas-Keilwinkel α_{G2} beträgt beispielsweise an der Unterkante BU des HUD-Bereichs B 0,3 mrad und an der Oberkante BO 0,1 mrad und wird im vertikalen Verlauf zwischen Unterkante BU und Oberkante BO monoton geringer.

Es ist alternativ auch möglich, eine keilförmige Außenscheibe 1 mit einem Keilwinkel α_{G1} und eine Innenscheibe 2 konstanter Dicke zu verwenden.

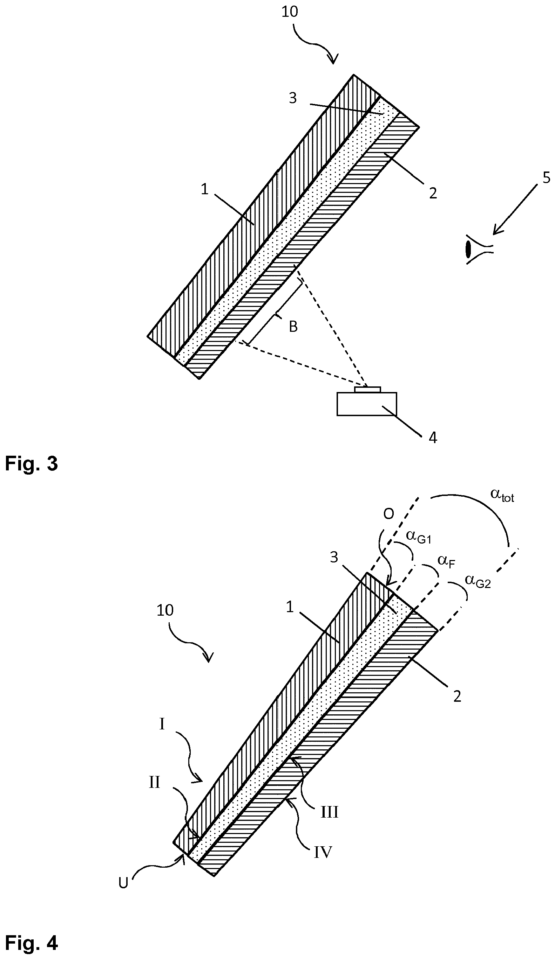

Fig. 3 zeigt die Verbundscheibe 10 der Figuren 1 und 2 als Teil einer Projektionsanordnung für ein HUD. Die Anordnung umfasst außer der Verbundscheibe 10 einen Projektor 4, welcher auf einen HUD-Bereich B gerichtet ist. Im HUD-Bereich B können durch den Projektor 4 Bilder erzeugt werden, welche vom Betrachter 5 (Fahrzeugfahrer) als virtuelle Bilder auf der von ihm abgewandten Seite der Verbundscheibe 10 wahrgenommen werden. Der Keilwinkel αₜₒₜ im HUD-Bereich B führt zu gegeneinander geneigten Oberflächen I, IV der Außenscheibe 1 und der Innenscheibe 2, wodurch Geisterbilder vermieden werden können.

Fig. 4 zeigt eine weitere Ausgestaltung der erfindungsgemäßen Verbundscheibe 10. Im Gegensatz zur Ausgestaltung nach Figur 2 weisen sowohl die Außenscheibe 1 als auch die Innenscheibe 2 einen Glas-Keilwinkel α_{G1}, α_{G2} auf. Die Zwischenschicht 3 weist auch hier einen Folien-Keilwinkel α_{F} auf. Der Gesamt-Keilwinkel αₜₒₜ ergibt sich aus der Summe der Glas-Keilwinkel α_{G1}, α_{G2} und des Folien-Keilwinkels α_{F}. Diese Ausgestaltung hat den Vorteil, dass die einzelnen Glas-Keilwinkel α_{G1}, α_{G2} geringer ausfallen können, was einfacher und mit besserer optischer Qualität herstellbar ist.

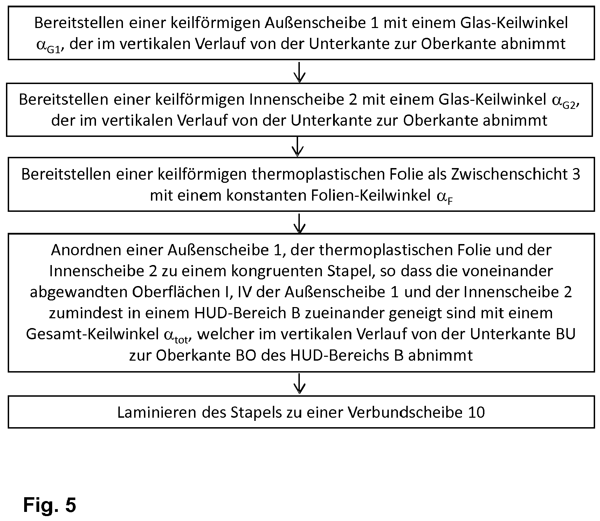

Fig. 5 zeigt ein Flussdiagramm eines Ausführungsbeispiels des erfindungsgemäßen Verfahrens zur Herstellung einer erfindungsgemäßen Verbundscheibe 10.

### Beispiele:

Tabelle 1 fasst einige beispielhafte Kombinationen von Keilwinkeln zusammen, mit denen die Erfindung vorteilhaft realisiert werden kann. Es ist jeweils der Keilwinkel der einzelnen Komponenten (Außenscheibe 1, Innenscheibe 2, Zwischenschicht 3) an der Unterkante BU und an der Oberkante BO des HUD-Bereichs B angegeben, in der Einheit mrad. Ein Keilwinkel von 0 mrad sagt aus, dass die Oberflächen der jeweiligen Komponente parallel sind, die Komponente also eine Konstante Dicke aufweist.

**Tabelle 1**

| Beispiel | Glas-Keilwinkel α_{G1} (Außenscheibe 1) | | Folien-Keilwinkel α_{F} (Zwischenschicht 3) | | Glas-Keilwinkel α_{G2} (Innenscheibe 2) | |
|---|---|---|---|---|---|---|
| | HU | HO | HU | HO | HU | HO |
| 1 | 0,2 | 0,1 | 0,2 | 0,2 | 0,2 | 0,1 |
| 2 | 0,3 | 0,1 | 0,05 | 0,05 | 0,3 | 0,1 |
| 3 | 0 | 0 | 0,05 | 0,05 | 0,3 | 0,1 |
| 4 | 0,2 | 0,1 | 0,2 | 0,2 | 0 | 0 |
| 5 | 0,3 | 0,1 | 0 | 0,1 | 0,3 | 0,1 |
| 6 | 0,3 | 0,1 | 0 | 0,1 | 0,2 | 0,1 |
| 7 | 0,5 | 0,4 | 0,1 | 0,1 | 0 | 0 |
| 8 | 0,3 | 0,2 | 0,1 | 0 | 0,3 | 0,2 |

### Bezugszeichenliste:

- (10): Verbundscheibe

- (1): Außenscheibe
- (2): Innenscheibe
- (3): thermoplastische Zwischenschicht
- (4): Projektor
- (5): Betrachter / Fahrzeugfahrer

- (O): Oberkante der Verbundscheibe 10
- (U): Unterkante der Verbundscheibe 10

- (B): HUD-Bereich der Verbundscheibe 10
- (BO): Oberkante des HUD-Bereichs B
- (BU): Unterkante des HUD-Bereichs B

- (I): außenseitige, von der Zwischenschicht 3 abgewandte Oberfläche der Außenscheibe 1
- (II): innenraumseitige, zur Zwischenschicht 3 hingewandte Oberfläche der Außenscheibe 1
- (III): außenseitige, zur Zwischenschicht 3 hingewandte Oberfläche der Innenscheibe 2
- (IV): innenraumseitige, von der Zwischenschicht 3 abgewandte Oberfläche der Innenscheibe 2

- αₜₒₜ: Gesamt-Keilwinkel
- α_{G1}: Glas-Keilwinkel der Außenscheibe 1
- α_{G2}: Glas -Keilwinkel der Innenscheibe 2
- α_{F}: Folien-Keilwinkel der Zwischenschicht 3

- A-A': Schnittlinie

## Patentansprüche

1. Verbundscheibe (10) für ein Head-Up-Display, die mindestens eine Außenscheibe (1) und eine Innenscheibe (2) umfasst, die über eine thermoplastische Zwischenschicht (3) miteinander verbunden sind, und die einen HUD-Bereich (B) aufweist mit einer Unterkante (BU) und einer Oberkante (BO), wobei
- die Dicke der Außenscheibe (1) und/oder der Innenscheibe (2) im vertikalen Verlauf zwischen der Unterkante (BU) und der Oberkante (BO) veränderlich ist mit einem Glas-Keilwinkel (α_{G1}, α_{G2}),
- die Dicke der Zwischenschicht (3) im vertikalen Verlauf zwischen der Unterkante (BU) und der Oberkante (BO) veränderlich ist mit einem Folien-Keilwinkel (α_{F}),
so dass die voneinander abgewandten Oberflächen (I, IV) der Außenscheibe (1) und der Innenscheibe (2) zumindest im HUD-Bereich (B) zueinander geneigt sind mit einem Gesamt-Keilwinkel (atot),
wobei der Gesamt-Keilwinkel (αₜₒₜ) im vertikalen Verlauf von der Unterkante (BU) zur Oberkante (BO) des HUD-Bereichs (B) abnimmt.

2. Verbundscheibe (10) nach Anspruch 1, wobei der Folien-Keilwinkel (α_{F}) durch Recken einer Folie in die Zwischenschicht (3) eingebracht ist, welche im Ausgangszustand bevorzugt eine konstante Dicke aufweist.

3. Verbundscheibe (10) nach Anspruch 1 oder 2, wobei die Dicke der Außenscheibe (1) und/oder der Innenscheibe (2) und die Dicke der Zwischenschicht (3) im vertikalen Verlauf zwischen der Unterkante (BU) und der Oberkante (BO) zunehmen.

4. Verbundscheibe (10) nach einem der Ansprüche 1 bis 3, wobei der Glas-Keilwinkel (α_{G1}) der Außenscheibe (1) und/oder der Glas-Keilwinkel (α_{G2}) der Innenscheibe (2) im vertikalen Verlauf von der Unterkante (BU) zur Oberkante (BO) des HUD-Bereichs (B) abnimmt.

5. Verbundscheibe (10) nach einem der Ansprüche 1 bis 4, wobei der Folien-Keilwinkel (α_{F}) im vertikalen Verlauf von der Unterkante (BU) zur Oberkante (BO) des HUD-Bereichs (B) konstant ist oder ansteigt.

6. Verbundscheibe (10) nach einem der Ansprüche 1 bis 5, wobei die Dicke der Außenscheibe (1) und die Dicke der Innenscheibe (2) zumindest im HUD-Bereich (B) im vertikalen Verlauf zwischen der Unterkante (BU) und der Oberkante (BO) veränderlich sind mit einem Glas-Keilwinkel (α_{G1}, α_{G2}).

7. Verbundscheibe (10) nach einem der Ansprüche 1 bis 6, wobei der Gesamt-Keilwinkel (αₜₒₜ) im gesamten HUD-Bereich (B) von 0,05 mrad bis 1,0 mrad beträgt, bevorzugt von 0,3 mrad bis 0,7 mrad.

8. Verbundscheibe (10) nach einem der Ansprüche 1 bis 7, wobei der Glas-Keilwinkel (α_{G1}, α_{G2}) höchstens 0,5 mrad beträgt, bevorzugt höchstens 0,3 mrad.

9. Verbundscheibe (10) nach einem der Ansprüche 1 bis 8, wobei der Folien-Keilwinkel (α_{F}) von 0,05 mrad bis 0,3 mrad beträgt, bevorzugt von 0,1 mrad bis 0,25 mrad.

10. Verbundscheibe (10) nach einem der Ansprüche 1 bis 9, wobei der Unterschied zwischen dem Gesamt-Keilwinkel (αₜₒₜ) an der Unterkante (BU) des HUD-Bereichs (B) und dem Gesamt-Keilwinkel (αₜₒₜ) an der Oberkante (BO) des HUD-Bereichs (B) mindestens 0,1 mrad beträgt, bevorzugt mindestens 0,15 mrad, besonders bevorzugt mindestens 0,2 mrad.

11. Verbundscheibe (10) nach einem der Ansprüche 1 bis 10, wobei die Außenscheibe (1) und/oder die Innenscheibe (2), bevorzugt die Außenscheibe (1) und die Innenscheibe (2) aus Glas gefertigt sind, bevorzugt aus Kalk-Natron-Glas, und wobei die Zwischenschicht (3) zumindest Polyvinylbutyral (PVB), Ethylenvinylacetat (EVA), Polyurethan (PU) oder Gemische oder Copolymere oder Derivate davon enthält.

12. Projektionsanordnung für ein Head-Up-Display, mindestens umfassend eine Verbundscheibe (10) nach einem der Ansprüche 1 bis 11 und einen Projektor (4), der auf den HUD-Bereich (B) der Verbundscheibe (10) gerichtet ist.

13. Verfahren zur Herstellung einer Verbundscheibe (10) für ein Head-Up-Display mit einem HUD-Bereich (B) mit einer Unterkante (BU) und einer Oberkante (BO), wobei
(a) eine Außenscheibe (1), eine Innenscheibe (2) und eine thermoplastische Zwischenschicht (3) bereitgestellt werden, wobei die Dicke der Außenscheibe (1) und/oder der Innenscheibe (2) im vertikalen Verlauf zwischen der Unterkante (BU) und der Oberkante (BO) veränderlich ist mit einem Glas-Keilwinkel (α_{G1}, α_{G2}) und wobei die Dicke der Zwischenschicht (3) im vertikalen Verlauf zwischen der Unterkante (BU) und der Oberkante (BO) veränderlich ist mit einem Folien-Keilwinkel (α_{F});
(b) die Zwischenschicht (3) zwischen der Außenscheibe (1) und der Innenscheibe (2) angeordnet wird, so dass die voneinander abgewandten Oberflächen (I, IV) der Außenscheibe (1) und der Innenscheibe (2) zumindest im HUD-Bereich (B) zueinander geneigt sind mit einem Gesamt-Keilwinkel (atot), wobei der Gesamt-Keilwinkel (αₜₒₜ) im vertikalen Verlauf von der Unterkante (BU) zur Oberkante (BO) des HUD-Bereichs (B) abnimmt; und
(e) die Innenscheibe (2) und die Außenscheibe (1) durch Lamination miteinander verbunden werden.

14. Verfahren nach Anspruch 13, wobei der Folien-Keilwinkel (α_{F}) durch Recken einer thermoplastischen Folie in die Zwischenschicht (3) eingebracht wird, welche im Ausgangszustand bevorzugt eine konstante Dicke aufweist.

15. Verwendung einer Verbundscheibe nach einem der Ansprüche 1 bis 11 in einem Kraftfahrzeug, bevorzugt einem Personenkraftwagen, als Windschutzscheibe, die als Projektionsfläche eines Head-Up-Displays dient.
